# EUROPEAN PATENT APPLICATION

(11) **EP 2 172 805 A2**
(43) Date of publication of application: **07.04.2010**
(21) Application number: 09172256.1
(22) Date of filing: 05.10.2009
(51) Int. Cl.: G03B 15/06

(54) **Special positional synchronous illumination for reduction of specular reflection**

(30) Priority: 03.10.2008 GB 0818112
(71) Applicant: Hyde, John, Doncaster DN5 7UP (GB)
(72) Inventor: Hyde, John, Doncaster DN5 7UP (GB)
(74) Representative: Vaughan, Christopher Tammo

(57) **Abstract**

An illumination system for use with an image acquisition system for acquiring images for facial recognition applications, the image acquisition system including a camera or imaging device. The illumination system comprises at least two lighting units arranged such that light beams from the lighting units impinge upon opposite sides of a face of a subject when positioned for image acquisition. In addition, the lighting units are positioned or arranged such that, when the subject is wearing spectacles, light beams from the lighting units do not reflect from lenses of the spectacles at angles such that the light beams pass directly into the camera or imaging device. This helps to reduce or eliminate specular glare or reflection.

## Description

### BACKGROUND

Embodiments of the present invention relate to systems and methods for reducing reflection and glare from spectacles or glasses when acquiring images for use in facial recognition applications.

The acquiring of digital images of the face for identification purposes has become very common. Along with the preponderance of these stored digital images is the growth in automatic recognition systems. Facial recognition systems use eye geometry at an early stage of the recognition process. Once the facial area has been located within an image, the eyes are located and used as key reference points for the rest of the analysis. Artefacts that affect the ability to locate the eye region will therefore render many recognition processes ineffective. As the wearing of spectacles is common, reflections from the surface of the spectacles can be a major problem for automatic facial recognition systems.

The quality of the image is in general very important. Steps to remove the effects of motion blur, saturation, under and over exposure or colour changes due to background lighting changes are frequently taken. Common methods of reducing these effects include the use of flash photography or continuous high level lighting in controlled areas such as photo booths. In the case of flash photography, specular reflection from the wearing of spectacles is a very significant problem and frequently obscures the information from the eye region. The net result of the specular reflection is that the facial region is correctly illuminated but the reflective surface of the spectacles reflects so much light from the spectacles that all that can be seen is a white saturated region where the spectacles are. As the recognition system relies on information from this region the image is rendered useless. Techniques such as the use of polarising filters, for example as described in WO2005/104009 Facial Recognition System by OmniPerception Limited, address this to some extent but are relatively expensive. Other applications such as described in US Patent Application US 2002/0181774 (Face portion detecting apparatus) use an array of light sources that can be synchronised with the camera and accepts that specular reflections will occur. By taking multiple images with different illumination patterns, specular reflections can be identified and subsequently their effect can be minimised or removed by image processing techniques. The minimisation requires significant amounts of image processing and as the images are acquired at different times significant errors can result in the final image. It is known to reduce windshield reflections in the automotive industry by providing an "active" glass with changeable reflective properties, as disclosed for example in WO 2008/150626. However, this solution is not practical to reduce specular reflection, since spectacle lenses are not made of such "active" glass.

### BRIEF SUMMARY OF THE DISCLOSURE

According to a first aspect of the present invention, there is provided an illumination system for use with an image acquisition system for acquiring images for facial recognition applications, the image acquisition system including a camera or imaging device, the system comprising at least two lighting units arranged such that light beams from the lighting units impinge upon opposite sides of a face of a subject when positioned for image acquisition, the lighting units being positioned or arranged such that, when the subject is wearing spectacles, light beams from the lighting units do not reflect from lenses of the spectacles at angles such that the light beams pass directly into the camera or imaging device.

According to a second aspect of the present invention, there is provided a method of illuminating a subject in order to obtain an image for facial recognition analysis with a camera or imaging device, wherein the subject is illuminated by at least two lighting units, and wherein the lighting units are arranged such that light beams from the lighting units impinge upon opposite sides of a face of a subject when positioned for image acquisition, the lighting units being positioned or arranged such that, when the subject is wearing spectacles, light beams from the lighting units do not reflect from lenses of the spectacles at angles such that the light beams pass directly into the camera or imaging device.

Embodiments of the invention encompass the use of multipoint synchronous flash illumination orientated to the subject such that light travelling from any of the illumination sources striking the surface of the spectacle lenses is reflected at an angle greater than the angle between flash, spectacle lens and camera. The multipoint flash system is triggered simultaneously giving an even illumination of the entire face in a single frame. Due to the single frame full face image acquisition, the technique is particularly suitable for facial recognition and is immune to motion related errors compared to other techniques where multiple images are taken and subsequently processed to remove specular reflections.

Although the lighting units are preferably flash lighting units, it is also possible to use continuous light sources.

The lighting units must be located outside a volume defined as a truncated cone having an axis generally defined by a line drawn from a centre of a lens of the imaging device or camera and a centre of the subject's face (ideally containing the region of the face where the subject's spectacles are located). The wider end of the truncated cone is in a plane containing the camera or imaging device, and the narrower end of the truncated cone is in a plane containing the subject's spectacles. The sides of the cone are angled relative to the axis at an angle which is at least the minimum angle along which a light beam can travel from a point in the plane containing the wider end of the truncated cone and reflect back from a lens of the spectacles worn by the subject without subsequently being directed to impinge upon the axis at the wider end.

It will be appreciated that the lighting units of embodiments of the present invention are preferably positioned so as to illuminate a subject from opposite sides in a way that is considered unacceptable for conventional portrait photography. This is because aesthetically-flattering illumination is not required for facial recognition techniques - instead, what is needed, is an image that clearly identifies facial characteristics of the subject. Accordingly, lighting techniques used in conventional portrait photography are of no particular relevance to the present invention, since a completely different problem is being addressed, namely that of specular reflection.

The lighting units or light sources of embodiments of the invention may generate light in the visible spectrum, for example white light, or alternatively may generate light in the near infra red (NIR) region of the electromagnetic spectrum. This has the advantage that flashes of NIR light are not normally visible to a user.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

### BRIEF DESCRIPTION OF THE DRAWINGS

For a better understanding of the present invention and to show how it may be carried into effect, reference shall now be made by way of example to the accompanying drawings, in which:
FIGURE 1 shows a typical configuration with a flash lamp mounted on a camera;
FIGURE 2 is an image captured using the arrangement of Figure 1 and showing specular reflection;
FIGURE 3 shows an arrangement in which back illumination of a region behind the camera is used to illuminate the facial region of a subject;
FIGURE 4 is an image captured using the arrangement of Figure 3 and showing specular reflection;
FIGURE 5 shows an arrangement in which the flash lamps are mounted away from the camera but at a distance where the angle between light source, spectacles and camera is relatively small;
FIGURE 6 shows an embodiment of the present invention in which the flash lamps are mounted in a position to the front of the camera and to the side of the facial region;
FIGURE 7 is an image captured using the arrangement of Figure 6 and showing no or much reduced specular reflection;
FIGURE 8 shows in geometric form the principles of embodiments of the present invention;
FIGURE 9 shows an alternative embodiment of the present invention in which flash lamps are mounted close to the camera, but wherein additional reflectors are provided in order to simulate a virtual light source at a desired position;
FIGURES 10(a) to 10(c) are ray diagrams illustrating angles of refraction and reflection for light beam incident on three differently-angled spectacle lenses;
FIGURE 11 shows in outline how a further embodiment of the invention may be implemented; and
FIGURE 12 is a schematic three dimensional representation of the arrangement of Figure 11.

### DETAILED DESCRIPTION

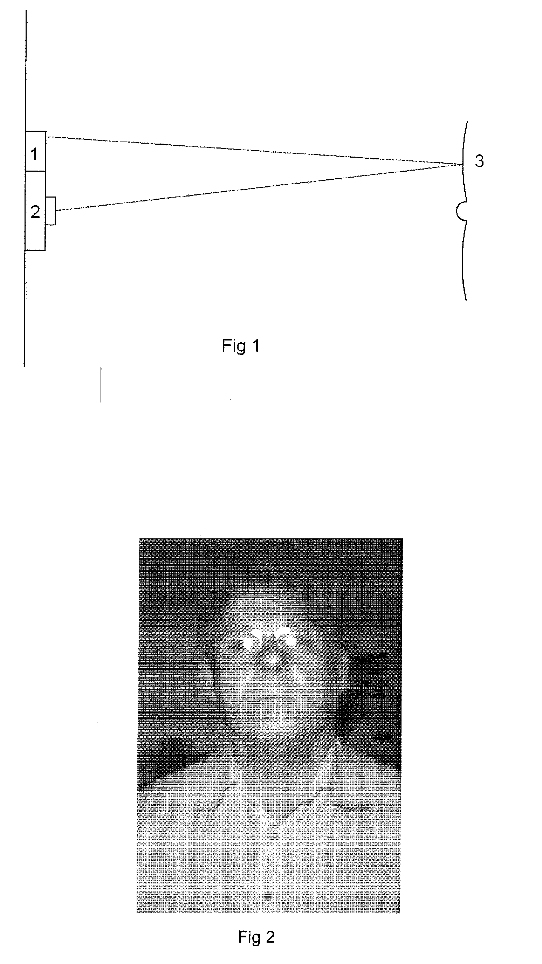

Figure 1 shows a typical arrangement for capturing a facial image for face recognition applications. A flash lamp 1 is mounted on or close to a camera 2, and a user stands or sits with his/her face 3 towards the camera 2. This is fine for users who do not wear spectacles, but for spectacle-wearers areas of the spectacles normal to the flash produce high levels of reflected light. The light intensity reflected from the surface of the spectacles is likely to be in excess of ten times the light reflected from the eye region itself.

This results in white-out or saturation as shown in Figure 2. As the surface of the spectacle lens is curved specular reflections will occur even if the position of the head is changed. Only when the head position is significantly moved will the specular reflection not be seen by the camera. The size of the movement will limit the performance of the facial recognition systems.

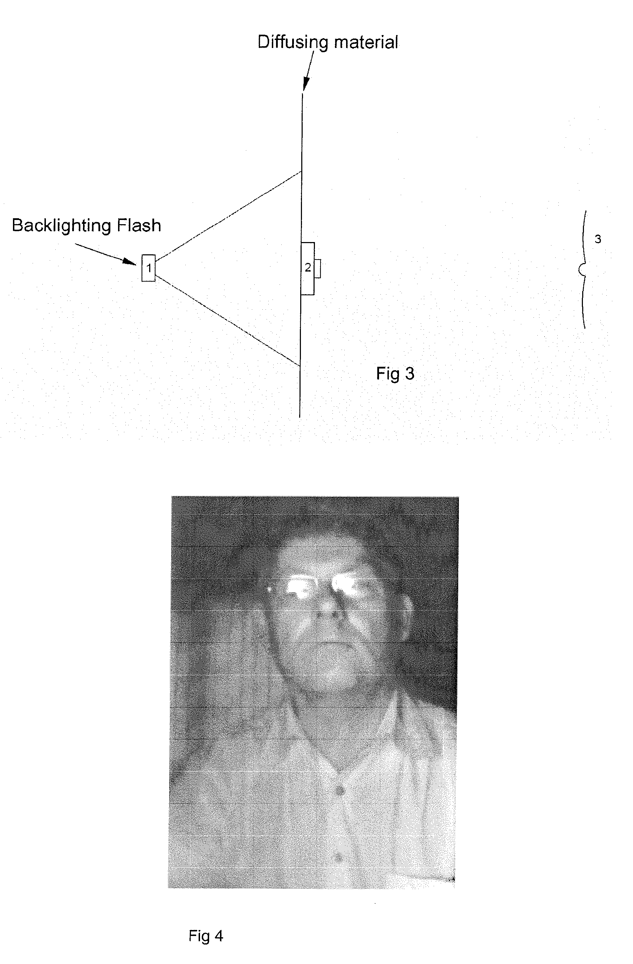

Figure 3 shows an arrangement where back illumination of the region behind the camera 2 is used to illuminate the facial region 3. The back illumination may be by the direct illumination 1 of a diffuse material from behind or by reflecting a light source 1 on a diffusing reflective surface. In this configuration the high intensity region emanating from the flash devices 1 is spread over a wider area producing a more even illumination. This avoids the image of the flash device 1 being reflected into the camera 2 but does create a much larger area producing light that can be reflected into the camera 2 lens.

The net result is that the large illumination area is reflected in the spectacles, again producing saturation of the eye region. This is shown in Figure 4.

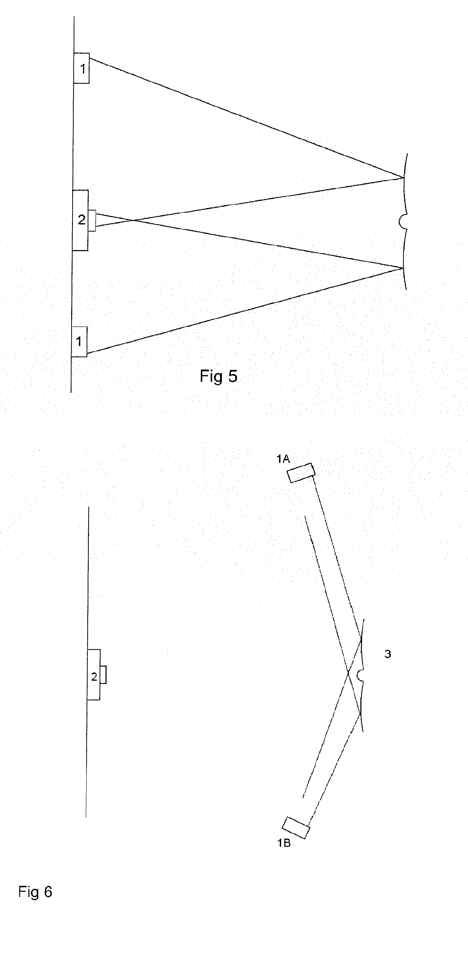

Figure 5 shows a configuration where the light sources 1 are mounted separately to the camera 2 but at a distance where the angle between light source 1, spectacles and camera 2 is relatively small. Whilst producing an evenly illuminated image, specular reflections are significant.

The solution to the problems is shown in Figure 6 where the flash 1A is mounted in a position to the front of the camera 2 and to the side of the facial region 3. Light emitted from flash 1A illuminates the facial region 3 at an angle such that shadows are not formed on the side of the face 3 illuminated by flash 1A as seen by the camera 2. However the light source 1A is sufficiently far forward and to the side of the spectacles that light emitted from the flash 1A strikes the spectacle region and the reflected light travels on a path that does not intersect with the viewing region of the camera 2.

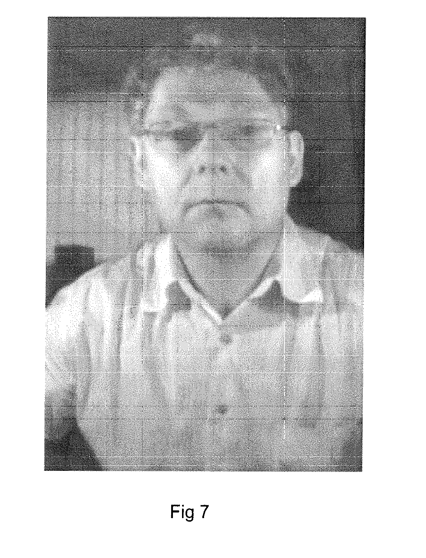

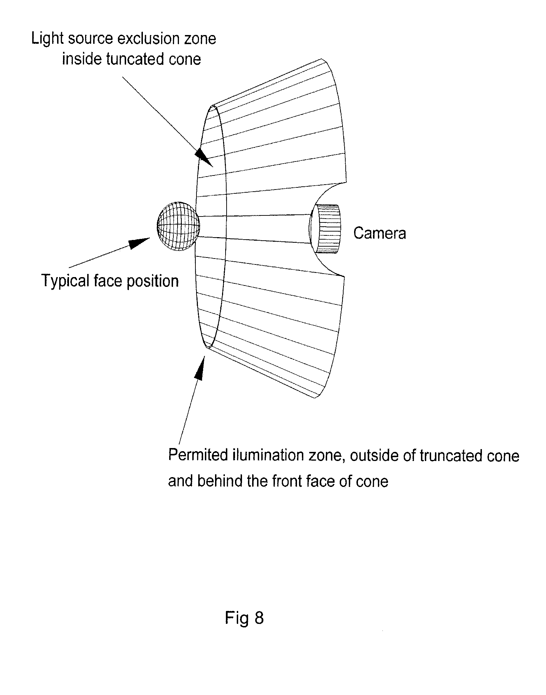

The light reflected from the eye region can then be clearly seen by the camera 2 as shown in Figure 7. The use of a single flash light source 1A however results in illumination of one side of the face only. A second light source 1 B must therefore be employed to illuminate the region of the face not illuminated by flash 1A. Flash 1 B is mounted in such a way as to meet the same criterion as flash 1A but illuminating the region not illuminated by 1A. Further illumination may be applied that meet the criterion of flash 1A but on a different axis. This may ultimately be extended to an area of illumination where the central region is unilluminated and area outside the critical inner region is illuminated, as shown in Figure 8. Any illumination sources must be in front of the face 3 and sufficiently to the side of the face 3 to avoid specular reflection taking into account the curvature of the spectacle lens. The illumination sources may be behind the plane of the camera 2 but must be located at a correspondingly larger distance from the axis of the camera 2.

As each individual light source 1 illuminates a specific region the light sources 1 must flash synchronously and be of similar intensity such that they appear as a single light source 1 in respect of time and intensity. With this criterion met a single image can be acquired based on a single flash event and no image processing is required to build composite images or remove regions with specular reflections.

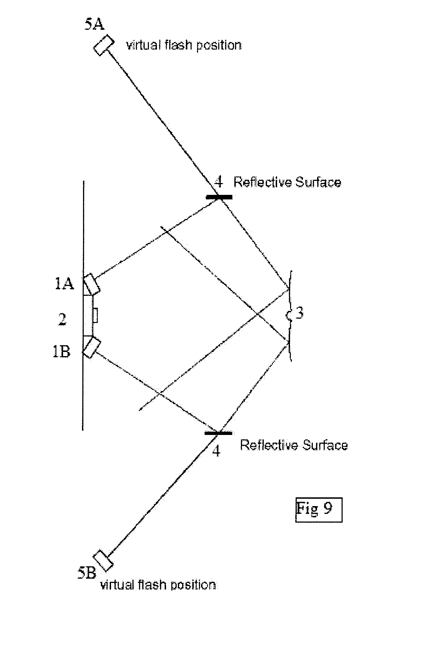

A second embodiment of the invention shown in Figure 9 employs mirrors 4 to place the flash light sources 1A, 1 B at virtual locations.

In this embodiment a compact assembly may be employed comprising a camera 2 and multiple flash assemblies 1. The positioning of the flash units 1 is such that the light from the flash 1 does not illuminate the face 3 directly but is reflected by a reflective surface 4. This places the actual flash location such that it appears in a virtual position 5A, 5B. The virtual position 5A, 5B meets the positioning requirement of the first embodiment. This configuration places all active components in a single location and reduces the area required for the optical requirements of the system. It is therefore very suitable for applications such as cash dispensing machines.

A third embodiment of the invention employs a steady state light source where the need for synchronisation between light source and camera is removed. In the case of steady state lighting, effects from motion blur and background lighting all become much more significant and reflections from windows interior lighting etc., may all result in specular reflection creating problems. However in applications where these effects are small and controlled, steady state lighting may be employed in the same geometry as the first or second embodiments.

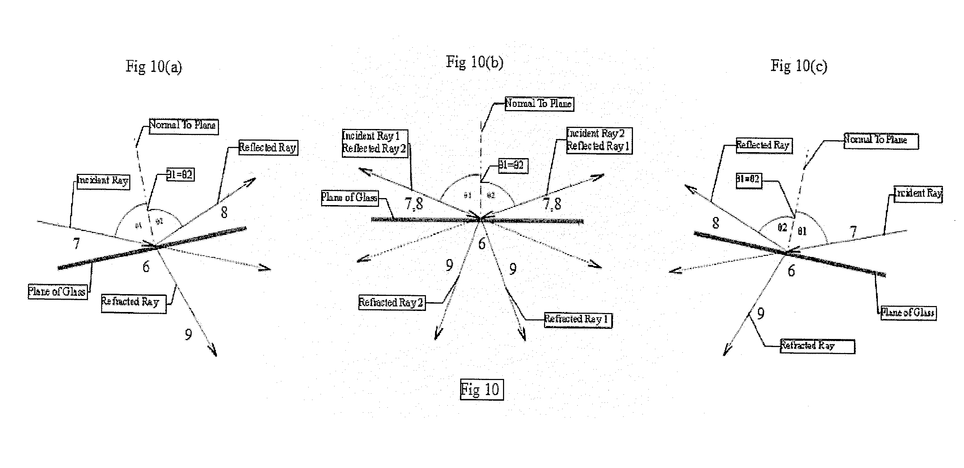

The solution provided by embodiments of the present invention does not aim to stop reflections from actually occurring, nor does it aim just to limit reflections in such a way that further image processing can easily remove the reflections. As shown in Figures 10(a) to 10(c), reflections will occur but are dependent on the position of the light sources in relation to the spectacles. Figures 10(a) to 10(c) in each case show a spectacle lens 6 at a different angle to an incident ray 7, and the resulting reflected ray 8 and refracted ray 9. Figures 10(a) to 10(c) demonstrate that while an optimum set-up is different for every situation, given the general details of the spectacles, subject distance and the region the subject will be in with respect to the imaging device, the angle at which the light sources 1A, 1 B should be placed can be calculated. By knowing the angle between the incident light 7 and the normal 10 to the plane of the lens 6, the angle at which the reflection occurs is known. As a result a general configuration can be assembled such that for a wide range of subject positions, types of spectacles and poses, specular highlights and reflections are either eliminated or moved and reduced allowing analysis of the eye region to take place.

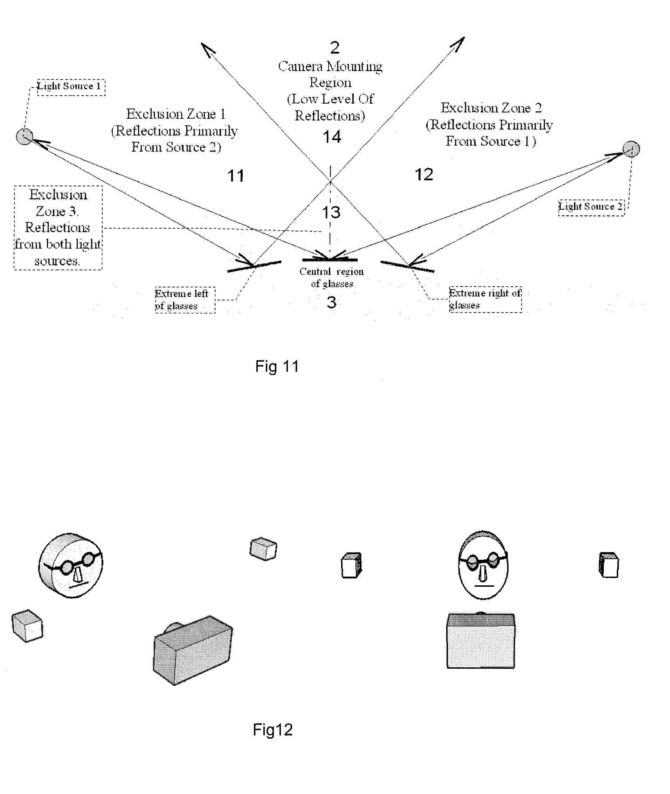

As shown in Figure 11, reflections may still occur, but they are placed in positions where they cannot affect the camera 2. This creates several different 'zones'. There are four active zones 11, 12, 13 and 14 (zones within the operating area) detailed in Figure 11. Three of these zones 11, 12, 13 are exclusion zones. This terminology refers to regions in which reflections will occur and hamper image capture. However due to the geometrical layout a fourth zone 14 has been created directly in front of the subject 3. This is the camera mounting area. If the camera 2 is placed in this area it should be able to capture images with minimal reflections occurring from spectacles 6 worn by the subject. If conditions were ideal then the camera 2 would see no specular reflections from the spectacles 6. However, since spectacles 6 do not have perfectly smooth surfaces, and also because a point light source is difficult to achieve, there is likely to be some amount of reflection present in images captured by the camera 2. However this technique significantly reduces the effect such that images can be used for facial recognition and other applications where they would otherwise be unusable. Furthermore it requires no additional image processing or special cooperation from the subject. The image is acquired in a single shot thus removing distortions due to motion creating differences in the images that multi-shot solutions have difficulties resolving.
Figure 11 is a typical example for where the different zones 11, 12, 13, 14 are located. The exact boundaries and shape of the zones will change dependent on the geometry between the light sources 1A, 1 B and the spectacles 6.

Figure 12 shows a schematic 3D representation of Figure 11.

## Claims

1. An illumination system for use with an image acquisition system for acquiring images for facial recognition applications, the image acquisition system including a camera or imaging device, the system comprising at least two lighting units arranged such that light beams from the lighting units impinge upon opposite sides of a face of a subject when positioned for image acquisition, the lighting units being positioned or arranged such that, when the subject is wearing spectacles, light beams from the lighting units do not reflect from lenses of the spectacles at angles such that the light beams pass directly into the camera or imaging device.

2. A system as claimed in claim 1, the lighting units being positioned such that that light beams from either lighting unit, if striking the spectacle lenses, are reflected at an angle greater than the angle between lighting unit, spectacle lens and camera or imaging device.

3. A system as claimed in any preceding claim, further comprising at least one reflector positioned in a light path between at least one lighting unit and the subject.

4. A system as claimed in any preceding claim, wherein the lighting units are located outside a volume defined as a truncated cone having an axis generally defined by a line drawn from a centre of a lens of the camera or imaging device and a centre of the subject's face, a wider end of the truncated cone being in a plane containing the camera or imaging device, and a narrower end of the truncated cone being in a plane containing the subject's spectacles, and wherein the sides of the cone are angled relative to the axis at an angle which is at least the minimum angle along which a light beam can travel from a point in the plane containing the wider end of the truncated cone and reflect back from a lens of the spectacles worn by the subject without subsequently being directed to impinge upon the axis at the wider end.

5. A system as claimed in any preceding claim, wherein the lighting units are flash lamps.

6. A system as claimed in claim 5, wherein the flash lamps are part of a multipoint synchronous flash illumination system.

7. A system as claimed in any one of claims 1 to 4, wherein the lighting units are continuous illumination lighting units.

8. A method of illuminating a subject in order to obtain an image for facial recognition analysis with a camera or imaging device, wherein the subject is illuminated by at least two lighting units, and wherein the lighting units are arranged such that light beams from the lighting units impinge upon opposite sides of a face of a subject when positioned for image acquisition, the lighting units being positioned or arranged such that, when the subject is wearing spectacles, light beams from the lighting units do not reflect from lenses of the spectacles at angles such that the light beams pass directly into the camera or imaging device.

9. A method according to claim 8, wherein the lighting units are positioned such that that light beams from either lighting unit, if striking the spectacle lenses, are reflected at an angle greater than the angle between lighting unit, spectacle lens and camera or imaging device.

10. A method according to claim 8 or 9, further comprising positioning at least one reflector in a light path between at least one lighting unit and the subject.

11. A method according to any one of claims 8 to 10, wherein the lighting units are located outside a volume defined as a truncated cone having an axis generally defined by a line drawn from a centre of a lens of the camera or imaging device and a centre of the subject's face, a wider end of the truncated cone being in a plane containing the camera or imaging device, and a narrower end of the truncated cone being in a plane containing the subject's spectacles, and wherein the sides of the cone are angled relative to the axis at an angle which is at least the minimum angle along which a light beam can travel from a point in the plane containing the wider end of the truncated cone and reflect back from a lens of the spectacles worn by the subject without subsequently being directed to impinge upon the axis at the wider end.

12. A method according to any one of claims 8 to 11, wherein the lighting units are flash lamps.

13. A method according to claim 12, wherein the flash lamps are part of a multipoint synchronous flash illumination system.

14. A method according to any one of claims 8 to 11, wherein the lighting units are continuous illumination lighting units.
